# EUROPÄISCHE PATENTSCHRIFT

(11) **EP 1 753 989 B1**
(45) Veröffentlichungstag und Bekanntmachung des Hinweises auf die Patenterteilung: **04.11.2009**
(21) Anmeldenummer: 05743131.4
(22) Anmeldetag: 13.05.2005
(51) Int. Cl.: F16K 15/06, F16K 15/02, F04B 53/10

(54) **RÜCKSCHLAGVENTIL**
CHECK VALVE
SOUPAPE DE RETENUE

(30) Priorität: 09.06.2004 DE 102004028073
(43) Veröffentlichungstag der Anmeldung: 21.02.2007
(73) Patentinhaber: Continental Automotive GmbH, 30165 Hannover (DE)
(72) Erfinder: NIGRIN, Uwe, 98693 Ilmenau (DE); VU, Ngoc-Tam, 71642 Ludwigsburg (DE)
(86) Internationale Anmeldenummer: PCT/EP2005/052213
(87) Internationale Veröffentlichungsnummer: WO 2005/121618

(56) Entgegenhaltungen:
- EP-A- 0 925 446
- DE-U1- 8 804 300
- US-A- 4 878 815
- US-A- 5 171 136
- US-B1- 6 231 323

## Beschreibung

Die Erfindung betrifft ein Rückschlagventil nach dem Oberbegriff des Patentanspruch 1 sowie eine Radialkolbenpumpe zur Kraftstoffhochdruckversorgung bei Kraftstoffeinspritzsystemen von Brennkraftmaschinen mit einem solchen Rückschlagventil.

Gattungsgemäße Rückschlagventile werden beispielsweise als Saugventile in Radialkolbenpumpen zur Kraftstoffhochdruckversorgung eingesetzt. Eine solche Anordnung ist z.B. aus der EP 0 925 446 B1 bekannt. Das Rückschlagventil weist dabei mehrere radiale Zuführbohrungen auf, welche nach innen in einer Stößeldurchgangsöffnung münden. Die Stößeldurchgangsöffnung ist im Bereich der Mündung radial etwas geweitet, damit bei geöffnetem Rückschlagventil Kraftstoff an dem Stößel vorbei in den Verdichterraum der Pumpe gelangen kann. Nachteilig an einer solchen Lösung ist jedoch, dass durch den erweiterten Bereich die Führung des Ventilstößels in der Stößeldurchgangsöffnung unterbrochen wird. Das Rückschlagventil bietet dadurch nur eine kleine Führungsfläche für den Ventilstößel.

Durch die radialen Zuführbohrungen wird der Ventilkörper zudem auch in axialer Richtung geschwächt. Hierdurch kann es insbesondere bei der Montage des Rückschlagventils zu einem Verzug des Ventilkörpers kommen.

Die radialen Zuführbohrungen sind zudem nur mit hohem Aufwand zu entgraten, wodurch der Fertigungsaufwand für das Rückschlagventil steigt.

Die US 6,231,323 B1 offenbart eine Hochdruckpumpe mit einem Ventileinsatz, der in einem Verteilerblock der Pumpe angeordnet ist. Der Ventileinsatz hat einen feststehenden Ventileinsatzkörper mit mehreren gleichmäßig beabstandeten Öffnungen, die in diesem ausgebildet sind. In einer Zentralbohrung des Ventileinsatzkörpers ist eine Ventilvorrichtung angeordnet.

Ausgehend vom Stand der Technik liegt der vorliegenden Erfindung die Aufgabe zugrunde, ein Rückschlagventil bereitzustellen, welches eine möglichst große Ventilstößelführung gewährleistet, einen robusten Ventilkörper aufweist und welches einfach herstellbar ist.

Die Aufgabe wird gelöst durch die Merkmale des unabhängigen Patentanspruchs 1.

Vorteilhafte Ausgestaltungen der Erfindung, welche einzeln oder in Kombination miteinander einsetzbar sind, sind in den Unteransprüchen gekennzeichnet.

Die Erfindung baut auf einem gattungsgemäßen Rückschlagventil dadurch auf, dass der Zulauf zu dem Rückschlagventil über wenigstens eine, in der dem Ventilsitz abgewandten Stirnseite des Ventilkörpers ausgebildeten, Zuführnut und wenigstens einer, im Ventilkörper ausgebildeten, Zulaufbohrung erfolgt. Die Zuführnut bietet gegenüber einer radial Zuführbohrung den Vorteil, dass der Ventilkörper insgesamt, insbesondere in axialer Richtung, stabiler ausgebildet ist. Hierdurch ist die Gefahr eines Verziehens des Ventilkörpers, insbesondere bei einem Verstemmen des Ventils in einem anderen Bauteil, deutlich geringer. Ein weiterer Vorteil der Zuführnut besteht darin, dass eine Nut im Gegensatz zur einer Bohrung wesentlich einfacher entgraten lässt. Hierdurch werden die Herstellungskosten reduziert und der Herstellungsprozess vereinfacht.

Eine vorteilhafte Ausgestaltung der Erfindung sieht vor, dass zwei bis vier, vorzugsweise drei, Zuführnuten und zwei bis vier, vorzugsweise drei, Zulaufbohrungen im Ventilkörper ausgebildet sind. Mehrere Zuführnuten bzw. Zulaufbohrungen sind vorteilhaft um bei vollständig geöffneten Rückschlagventil eine hinreichend große Flüssigkeitsmenge durch das Rückschlagventil hindurch zu lassen. Dies ist bei einer einzelnen Zuführnut bzw. Zulaufbohrung nicht immer gewährleistet. In Versuchen haben sich drei Zuführnuten bzw. Zulaufbohrungen als besonders geeignet herausgestellt.

Eine weitere vorteilhafte Ausgestaltung der Erfindung sieht vor, dass jede Zuführnut mit jeweils einer Zulaufbohrung zusammenwirkt. Hierdurch ist gewährleistet, dass das Rückschlagventil gleichmäßig durchströmt wird.

Erfindungsgemäß bevorzugt sind die Zuführnuten sternförmig mit äquidistanten Winkelabstand zueinander angeordnet. Die gleichmäßige Verteilung der Zuführnuten sorgt für eine besonders gleichmäßige Zuströmung zum Rückschlagventil. Hierdurch wird wirkungsvoll verhindert das der Ventilstößel einseitig angeströmt und damit belastet wird.

Eine weitere vorteilhafte Ausgestaltung der Erfindung sieht vor, dass jede Zulaufbohrung gegenüber der Führungsbohrung beabstandet ist und die Zulaufbohrung in einem vom Ventilkörper und dem Ventilstößel ausgebildeten Ringraum, oberhalb des Ventilsitzes, endet. Dadurch, dass die Zulaufbohrungen gegenüber der Führungsbohrung beabstandet sind ergibt sich in vorteilhafter Weise eine besonders große Führungsfläche da diese nicht, wie beim Stand der Technik, durch einen erweiterten Bereich unterbrochen ist. Der Ventilstößel wird dadurch über einen wesentlich längeren Bereich geführt. Hierdurch ist eine sicherere Ventilführung gewährleistet. Durch die sichere Ventilführung ist ein Verkanten des Ventilstößels innerhalb der Führungsbohrung weitgehend ausgeschlossen, wodurch sich ein gleichmäßiges Anlegen des Ventiltellers am Ventilsitz und somit eine sicherere Abdichtung des Rückschlagventils in seiner Schließstellung ergibt.

Besonders bevorzugt sind die Zulaufbohrungen parallel zum Ventilstößel verlaufend. Die parallele Anordnung der Zulaufbohrungen lässt sich fertigungstechnisch besonders einfach realisieren. Hierdurch werden die Fertigungskosten für das Rückschlagventil weiter reduziert. Selbstverständlich ist es aber auch möglich, dass die Zulaufbohrungen in einem beliebigen Winkel, bezogen auf die Achse des Ventilstößels, im Ventilkörper ausgebildet sind.

Eine weitere vorteilhafte Ausgestaltung der Erfindung sieht vor, dass ein Spannmittel auf dem, dem Ventilteller gegenüberliegendem Ende des Ventilstößels angeordnet ist und eine Ventilfeder zwischen dem Ventilkörper und dem Spannmittel vorgesehen ist und das Rückschlagventil durch die Ventilfeder vorgespannt ist, wobei das Spannmittel eine durch ein Sicherungselement auf dem Ventilstößel gesicherte Bundbuchse ist. Durch die Sicherung des Bundbuchsenelementes mit Hilfe eines Spannmittels ergibt sich zum einen eine sichere Fixierung der Bundbuchse und zum anderen eine besonders einfach Montage der Bundbuchse auf dem Ventilstößel.

In einer besonders vorteilhaften Ausgestaltung der Erfindung ist das Sicherungselement eine Klemmscheibe. Die Verwendung einer Klemmscheibe bietet den Vorteil, dass die Klemmscheibe als Normteil zugekauft werden kann. Die Klemmscheibe ist preiswert und reduzieren somit die Herstellungskosten des Rückschlagventils. Die Klemmscheiben sind zudem einfach in einer Nut, welche im Ventilstößel ausgebildet ist, zu montieren, wodurch sich der Montageaufwand weiter vereinfacht.

Eine weiter vorteilhafte Ausgestaltung der Erfindung sieht vor, dass die Ventilfeder sich einenends gegen die Bundbuchse und anderenends gegen den Ventilkörper abstützt. Die Abstützung der Ventilfeder, einenends gegen die Bundbuchse und anderenends gegen den Ventilkörper, ergibt einen besonders einfachen Aufbau des Rückschlagventils und eine sichere Abstützung der Ventilfeder.

Die Erfindung umfasst weiterhin eine Radialkolbenpumpe zur Kraftstoffhochdruckversorgung bei Kraftstoffeinspritzsystemen von Brennkraftmaschinen, mit einem erfindungsgemäßen Ansaugventil. Das erfindungsgemäße Ansaugventil lässt sich einfach in einer als Zylinderraum ausgebildeten und mit einem Verschlussstopfen versehenen Durchgangsbohrung montieren. Hierzu wird das Rückschlagventil mit dem Verschlussstopfen gegen einen Bund der als Stufenbohrung ausgebildeten Durchgangsbohrung gepresst. Ein Verzug des Ventilkörpers ist dabei aufgrund der robusten Ausbildung des Ventilkörpers weitgehend ausgeschlossen.

Aufgrund der Zulaufnuten an Stelle von radialen Zuführöffnungen ergibt sich in besonders vorteilhafter Weise eine große Führungsfläche für den Ventilstößel. Hierdurch ist eine sichere Funktion und eine hohe Lebensdauer des Rückschlagventils gewährleistet.

Ausführungsbeispiele und weitere Vorteile der Erfindung werden im folgenden anhand der Zeichnungen erläutert. Es zeigt schematisch:
- Figur 1:: eine 3-D Ansicht eines erfindungsgemäßen Rückschlagventils; und
- Figur 2:: eine Detailansicht einer Radialkolbenpumpe mit dem in Figur 1 gezeigten Rückschlagventil.

Gleich bzw. funktionsgleiche Bauteile werden nachfolgend figurübergreifend mit den gleichen Bezugszeichen versehen.

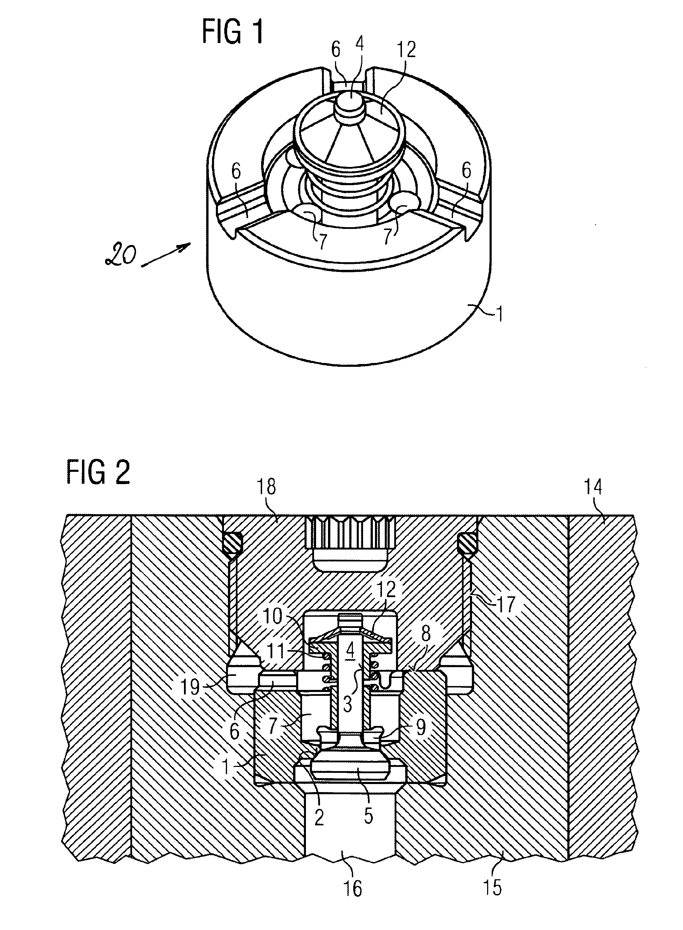

Das Rückschlagventil wird nachfolgend im wesentlichen anhand der Figur 2 erläutert. Die dreidimensionale Darstellung des Rückschlagventils in Figur 1 dient dabei im wesentlich der räumliche Vorstellung.
Figur 2 zeigt eine Detailansicht einer Radialkolbenpumpe insbesondere zur Kraftstoffhochdruckversorgung bei Kraftstoffeinspritzsystemen von Brennkraftmaschinen. Die Radialkolbenpumpe umfasst ein Pumpengehäuse 14 und wenigstens einen Zylindereinsatz 15 indem ein Zylinderraum 16 bildende, gestufte Durchgangsöffnung 17 eingebracht ist. In dem radial äußeren Ende der Durchgangsöffnung 17 ist ein Verschlusselement 18 eingesetzt, welches den Zylinderraum 16 druckdicht gegenüber der Umgebung verschließt. Die Kraftstoffzuführung zu dem Zylinderraum 16 erfolgt über eine zum Zylinderraum 16 im wesentlichen radiale Kraftstoffzuführöffnung 19 im Zylindereinsatz 15 und ein in der Durchgangsöffnung 17 angeordnetes Ansaugventil 20. Das Ansaugventil 20 wird über das Verschlusselement 18 gegen einen Absatz innerhalb der gestuften Durchgangsöffnung 17 im Zylindereinsatz 15 gepresst und so in der Durchgangsöffnung 17 fixiert.

Das Ansaugventil 20 (siehe Fig. 1) ist als Rückschlagventil ausgebildet. Es umfasst einen Ventilkörper 1 mit einem im Ventilkörper 1 ausgebildeten Ventilsitz 2 und einen, in einer Führungsbohrung 3 des Ventilkörper 1 geführten, Ventilstößel 4 mit einem an dem Ventilstößel 4 ausgebildeten Ventilteller 5 der dichtend an dem im Ventilkörper 1 ausgebildeten Ventilsitz 2 anlegbar ist. Der Zulauf 6, 7 zu dem Rückschlagventil 20 erfolgt über drei, in der dem Ventilsitz 2 abgewandten Stirnseite 8 des Ventilkörper 1 ausgebildeten, Zuführnuten 6 und weiter über drei im Ventilkörper 1 ausgebildete Zulaufbohrungen 7. Die Zulaufnuten 6 weisen einen rechteckigen Strömungsquerschnitt auf. Es ist allerdings auch möglich die Zuführnuten mit einem hiervon abweichenden Strömungsquerschnitt, beispielweise einem halbrundförmigen Querschnitt, auszubilden. Dadurch, dass die Zuführnuten 6 in der Stirnseite 8 des Ventilkörpers 1 ausgebildet sind lassen sie sich besonders einfach entgraten. Das Einbringen der Zuführnuten 6 ist ebenfalls besonders einfach, beispielsweise durch Fräsen, möglich. Durch das Einbringen der Zuführnuten 6 in die Stirnfläche 8 des Ventilkörpers 1 ergibt sich ein besonders robuster Ventilkörper 1 der nicht durch radiale Zulaufbohrungen geschwächt wird und somit höhere axiale Anzugskräfte durch den Verschlussstopfen 18 aufnehmen kann. Eine Verzugsgefahr des Ventilkörpers 1 ist, im Gegensatz zu den üblichen Ventilkörpern wie sie im Stand der Technik aufgezeigt sind, nicht gegeben. Die drei Zuführnuten 6 sind dabei so dimensioniert, dass ihr gesamter Strömungsquerschnitt mindestens dem Durchströmungsquerschnitt des Rückschlagventils 20 im Bereich des Ventilsitzes 2, bei vollständig geöffneter Ventilstellung, entspricht.
Bei den Zuführnuten 6 hat sich eine Anzahl von drei, sternförmig mit äquidistanten Winkelabstand zu einander angeordneten Zuführnuten 6 als besonders vorteilhaft herausgestellt. Durch die drei sternförmig angeordneten Zuführnuten 6 ergibt sich eine besonders gleichmäßige An- und Durchströmung des Rückschlagventils 20. Selbstverständlich ist es aber auch möglich eine andere Anzahl von Zuführnuten 6 in der Stirnseite 8 des Ventilkörpers 1 auszubilden.

Jede Zuführnut 6 wirkt mit jeweils einer Zulaufbohrung 7 zusammen. Hierdurch ergibt sich eine weiter verbesserte, besonders gleichmäßige, Durchströmung des Rückschlagventils 20. Die Zulaufbohrungen 7 sind dabei gegenüber der Führungsbohrung 3 beabstandet. Durch die Beabstandung der Zulaufbohrungen 7 gegenüber der Führungsbohrung 3 ergibt sich eine Durchgehende, besonders lange, Führungsbohrung 3. Hierdurch ist eine sichere Führung des Ventilstößels 4 im Ventilkörper 1 gewährleistet. Die sichere Ventilstößelführung gewährleistet, dass der Ventilteller 5 gleichmäßig an dem im Ventilkörper 1 ausgebildeten Ventilsitz 2 anliegt und somit im geschlossenen Zustand eine sichere Abdichtung des Rückschlagventils erfolgt. Aufgrund der größeren Führungsfläche ergibt sich zudem ein geringerer Verschleiß und damit eine höhere Lebensdauer des Rückschlagventils 20.

Die Zulaufbohrungen 7 enden in einem vom Ventilkörper 1 und dem Ventilstößel 4 ausgebildeten Ringraum 9 oberhalb des Ventilsitzes 2. Bei geöffnetem Rückschlagventil 20 kann die Flüssigkeit von diesem Ringraum 9, durch den Zwischenraum zwischen Ventilkörper 1 und Ventilteller 5 hindurchströmen. Die Zulaufbohrung 7 sind parallel zum Ventilstößel 4 verlaufend ausgebildet. Die parallele Ausbildung bietet vor allem fertigungstechnische Vorteile. Es ist aber auch möglich, die Bohrungen in einem beliebigen Winkel zur Achse des Ventilstößels 4 auszubilden, ohne dass die Funktion des Rückschlagventils 20 beeinträchtigt wird.

Das Rückschlagventil 20 weist ein als Bundbuchse 10 ausgebildetes Spannmittel auf welches auf dem, dem Ventilteller 5, gegenüberliegendem Ende des Ventilstößels 4, angeordnet ist. Zwischen der Bundbuchse 10 und dem Ventilkörper 1 ist eine Ventilfeder 11 angeordnet. Durch die Ventilfeder 11 ist das Rückschlagventil 20 in Schließrichtung vorgespannt. Die Bundbuchse 10 ist durch ein Sicherungselement 12 auf dem Ventilstößel 4 gesichert. Als Sicherungselement 12 wird eine Klemmscheibe verwendet. Bei der Klemmscheibe 12 handelt es sich um ein Normbauteil. Die Klemmscheibe 12 ist dabei in einer Nut im Ventilstößel 4 fixiert. Durch die Klemmscheibe 12 wird ein Verlust der Bundbuchse 10 sicher verhindert. Die Klemmscheibe 12 ermöglicht eine besonders einfache Montage der Bundbuchse 10 auf dem Ventilstößel 4. Hierdurch verringern sich sowohl die Montagezeiten als auch die Montagekosten.

Das gesamte Rückschlagventil 20 kann als Baugruppe vormontiert werden. Hierdurch erleichtert sich die Montage des Rückschlagventils 20 in der Radialkolbenpumpe. Das erfindungsgemäße Rückschlagventil 20 ist selbstverständlich nicht auf Radialkolbenpumpen beschränkt, sondern lässt sich überall dort einsetzen, wo es auf ein zuverlässiges, robustes und langlebiges Rückschlagventil ankommt.

Zusammenfassend lässt sich somit feststellen, dass sich durch die spezielle, erfindungsgemäße Ausbildung des Ventilkörpers ein besonders stabiles Rückschlagventil ergibt. Durch die von der Führungsbohrung beabstandeten Zulaufbohrungen ergibt sich eine besonders große Führungsfläche, die eine sichere Führung des Ventilstößels gewährleistet und somit die Lebensdauer des Rückschlagventils erhöht. Das Rückschlagventil eignet sich besonders zur Verwendung in Radialkolbenpumpen zur Kraftstoffhochdruckversorgung bei Kraftstoffeinspritzsystemen von Brennkraftmaschinen insbesondere für Common Rail Einspritzsysteme.

## Patentansprüche

1. Rückschlagventil umfassend
- einen Ventilkörper (1) mit einem im Ventilkörper (1) ausgebildeten Ventilsitz (2); und
- einen, in einer Führungsbohrung (3) des Ventilkörpers (1) geführten, Ventilstößel (4), mit einem am dem Ventilstößel (4) ausgebildeten Ventilteller (5) der dichtend an dem im Ventilkörper (1) ausgebildeten Ventilsitz (2) anlegbar ist;
**dadurch gekennzeichnet, dass**
der Zulauf (6, 7) zu dem Rückschlagventil über
- wenigstens eine, in der dem Ventilsitz (2) abgewandten Stirnseite (8) des Ventilkörpers (1) ausgebildeten Zuführnut (6); und weiter, über
- wenigstens einer im Ventilkörper (1) ausgebildeten, Zulaufbohrung (7)
erfolgt.

2. Rückschlagventil nach Anspruch 1,
**dadurch gekennzeichnet, dass**
zwei bis vier, vorzugsweise, drei Zuführnuten (6) und zwei bis vier, vorzugsweise, drei Zulaufbohrungen (7) im Ventilkörper (1) ausgebildet sind.

3. Rückschlagventil nach Anspruch 1 oder 2,
**dadurch gekennzeichnet, dass**
jede Zuführnut (6) mit jeweils einer Zulaufbohrung (7) zusammenwirkt.

4. Rückschlagventil nach einem der vorherigen Ansprüche,
**dadurch gekennzeichnet, dass**
die Zuführnuten (6) sternförmig mit äquidistanten Winkelabständen zueinander angeordnet sind.

5. Rückschlagventil nach einem der vorherigen Ansprüche,
**dadurch gekennzeichnet, dass**
eine jede Zulaufbohrung (7) gegenüber der Führungsbohrung (3) beabstandet ist und die Zulaufbohrung (7) in einem vom Ventilkörper (1) und dem Ventilstößel (4) ausgebildeten Ringraum (9),oberhalb des Ventilsitzes (2), endet.

6. Rückschlagventil nach einem der vorherigen Ansprüche,
**dadurch gekennzeichnet, dass**
die Zulaufbohrungen (7) parallel zum Ventilstößel (4) verlaufen.

7. Rückschlagventil nach einem der vorherigen Ansprüche, weiter umfassend,
- ein Spannmittel (10), welches auf dem, dem Ventilteller (5) gegenüberliegendem Ende des Ventilstößels (4) angeordnet ist; und
- eine Ventilfeder (11), die zwischen dem Ventilkörper (1) und dem Spannmittel (10) angeordnet ist, wobei das Rückschlagventil durch die Ventilfeder (11) in Schließrichtung vorspannt ist,
**dadurch gekennzeichnet, dass**
das Spannmittel (10) eine, durch ein Sicherungselement (12) auf dem Ventilstößel (4) gesicherte Bundbuchse (10) ist.

8. Rückschlagventil nach Anspruch 7,
**dadurch gekennzeichnet, dass**
das Sicherungselement (12) eine Klemmscheibe (13) ist.

9. Rückschlagventil nach Anspruch 7 oder 8,
**dadurch gekennzeichnet, dass**
sich die Ventilfeder (11) einenends gegen die Bundbuchse (10) und anderenends gegen den Ventilkörper (1) abstützt.

10. Radialkolbenpumpe zur Kraftstoffhochdruckversorgung bei Kraftstoffeinspritzsystemen von Brennkraftmaschinen, mit
- einem Pumpengehäuse (14); und
- wenigstens einem Zylindereinsatz (15), in dem eine einen Zylinderraum (16) bildende Durchgangsöffnung (17) eingebracht ist, in deren äußerem Ende ein Verschlusselement (18) eingesetzt ist welches den Zylinderraum (16) druckdicht verschließt,
- wobei die Kraftstoffzuführung zu dem Zylinderraum (16) über eine zum Zylinderraum (16) im wesentlichen radiale Kraftstoffzuführöffnung (19) im Zylindereinsatz (15) und ein in der Durchgangsöffnung (17) angeordnetes Ansaugventil (20) erfolgt,
**dadurch gekennzeichnet dass**,
das Ansaugventil (20) als Rückschlagventil nach einem der vorherigen Ansprüche ausgebildet ist.

## Claims

1. Check valve comprising
- a valve body (1) with a valve seat (2) embodied in the valve body (1); and
- a valve plunger (4) guided in a guide borehole (3) of the valve body (1), with a valve disk (5) embodied on the valve plunger (4) which can be applied to the valve seat (2) embodied in the valve body (1) to form a seal;
**characterised in that**
the admission (6, 7) to the check valve is via
- at least one supply groove (6) embodied in the front side (8) of the valve body (1) opposite the valve seat (2); and
- at least one supply borehole (7) embodied in the valve body (1).

2. Check valve in accordance with claim 1,
**characterised in that**
two to four, preferably three supply grooves (6) and two to four, preferably three supply boreholes (7) are embodied in the valve body (1).

3. Check valve in accordance with claim 1 or 2,
**characterised in that**
each supply groove (6) operates in conjunction with at least one supply borehole (7).

4. Check valve in accordance with one of the previous claims,
**characterised in that**
the supply grooves (6) are arranged in a star configuration with equidistant angle spacings to each other.

5. Check valve in accordance with one of the previous claims,
**characterised in that**
each supply borehole (7) is spaced from the guide borehole (3) and the supply borehole (7) ends in an annular area (9) formed by the valve body (1) and the valve plunger (4) above the valve seat (2).

6. Check valve in accordance with one of the previous claims,
**characterised in that**
the supply boreholes (7) run parallel to the valve plunger (4) .

7. Check valve in accordance with one of the previous claims, further comprising,
- a tensioning means (10) which is arranged on the end of the valve plunger (4) opposite the valve disk (5) and
- a valve spring (11) which is arranged between the valve body (1) and the tensioning means (10), with the check valve being pretensioned by the valve spring (11) in its closing direction,
**characterised in that**
the tensioning means (10) is a collar attached by a securing element (12) to the valve plunger (4).

8. Check valve in accordance with claim 7,
**characterised in that**
the securing element (12) is a clamping washer (13).

9. Check valve in accordance with claim 7 or 8,
**characterised in that**
the valve spring (11) rests at one end against the collar (10) and at the other end against the valve body (1).

10. Radial reciprocating pump for high-pressure supply in fuel injection systems of internal combustion engines, with
- a pump housing (14); and
- at least one cylinder insert (15), into which a through-opening (17) forming a cylindrical space (16) is made, into the outer end of which a closure element (18) is fitted which forms a pressure-tight seal of the cylindrical space (16),
- with fuel being supplied to the cylindrical space (16) via a fuel supply opening (19) essentially radial to the cylindrical space (16) in the cylinder insert (15) and an intake valve (20) arranged in the through-opening (17),
**characterised in that**,
the intake valve (20) is embodied as a check valve in accordance with one of the previous claims.

## Revendications

1. Soupape de non-retour comprenant :
- un corps de soupape (1) avec un siège de soupape (2) formé dans le corps de soupape (1) ; et
- un poussoir de soupape (4) guidé dans un orifice de guidage (3) du corps de soupape (1), avec un plateau de soupape (5) formé sur le poussoir de soupape (4), lequel plateau de soupape peut s'appliquer de manière étanche sur le siège de soupape (2) formé dans le corps de soupape (1),
**caractérisée en ce que**
l'alimentation (6, 7) de la soupape de non-retour se fait via
- au moins une rainure d'acheminement (6) formée du côté frontal (8) du corps de soupape (1) opposé au siège de soupape (2) ; et en outre via
- au moins un orifice d'alimentation (7) formé dans le corps de soupape (1).

2. Soupape de non-retour selon la revendication 1,
**caractérisée en ce que**
deux à quatre, de préférence trois rainures d'acheminement (6) et deux à quatre, de préférence, trois orifices d'alimentation (7) sont formés dans le corps de soupape (1).

3. Soupape de non-retour selon la revendication 1 ou 2, **caractérisée en ce que**
chaque rainure d'acheminement (6) coopère respectivement avec un orifice d'alimentation (7).

4. Soupape de non-retour selon l'une quelconque des revendications précédentes,
**caractérisée en ce que**
les rainures d'acheminement (6) sont aménagées l'une par rapport à l'autre en étoile avec des écarts angulaires équidistants.

5. Soupape de non-retour selon l'une quelconque des revendications précédentes,
**caractérisée en ce que**
chaque orifice d'alimentation (7) est espacé par rapport à l'orifice de guidage (3) et **en ce que** l'orifice d'alimentation (7) se termine, au-dessus du siège de soupape (2), par un espace annulaire (9) formé par le corps de soupape (1) et le poussoir de soupape (4).

6. Soupape de non-retour selon l'une quelconque des revendications précédentes,
**caractérisée en ce que**
les orifices d'alimentation (7) s'étendent parallèlement au poussoir de soupape (4).

7. Soupape de non-retour selon l'une quelconque des revendications précédentes, comprenant en outre :
- un moyen de serrage (10), qui est aménagé à l'extrémité du poussoir de soupape (4) qui est opposée au plateau de soupape (5) ; et
un ressort de soupape (11), qui est aménagé entre le corps de soupape (1) et le moyen de serrage (10), la soupape de non-retour étant précontrainte par le ressort de soupape (11) dans le sens de la fermeture,
**caractérisée en ce que**
le moyen de serrage (10) est une douille à collet (10) retenue par un élément de retenue (12) sur le poussoir de soupape (4).

8. Soupape de non-retour selon la revendication 7, **caractérisée en ce que**
l'élément de retenue (12) est un disque de serrage (13).

9. Soupape de non-retour selon la revendication 7 ou 8,
**caractérisée en ce que**
le ressort de soupape (11) s'appuie à une extrémité contre la douille à collet (10) et à l'autre extrémité contre le corps de soupape (1).

10. Pompe à piston radial pour l'alimentation en carburant haute pression dans des systèmes d'injection de carburant de moteurs à combustion interne, comprenant :
- un boîtier de pompe (14) ; et
- au moins un élément rapporté cylindrique (15), dans lequel est ménagé un orifice de passage (17) formant un espace cylindrique (16), à l'extrémité externe duquel est aménagé un élément de fermeture (18), qui ferme l'espace cylindrique (16) de manière étanche à la pression,
- dans laquelle l'acheminement de carburant vers l'espace cylindrique (16) s'effectue par un orifice d'acheminement de carburant (19) sensiblement radial par rapport à l'espace cylindrique (16) dans l'élément rapporté cylindrique (15) et d'une soupape d'aspiration (20) aménagée dans l'orifice de passage (17),
**caractérisée en ce que**
la soupape d'aspiration (20) se présente sous la forme d'une soupape de non-retour selon l'une quelconque des revendications précédentes.
